(19) Europäisches Patentamt
European Patent Office
Office européen des brevets

(11) **EP 3 001 353 A2**

(12) **EUROPEAN PATENT APPLICATION**

(43) Date of publication:
**30.03.2016 Bulletin 2016/13**

(51) Int Cl.:
**G06K 9/62** (2006.01)    **G06T 7/20** (2006.01)

(21) Application number: **15186549.0**

(22) Date of filing: **23.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.09.2014   CN 201410515632**

(71) Applicant: **Ricoh Company, Ltd.**
**Tokyo 143-8555 (JP)**

(72) Inventors:
• **YANG, Tianyu**
  **100044 Beijing (CN)**
• **SHI, Zhongchao**
  **100044 Beijing (CN)**
• **LU, Yaojie**
  **100044 Beijing (CN)**

(74) Representative: **Maury, Richard Philip**
**Marks & Clerk LLP**
**90 Long Acre**
**London WC2E 9RA (GB)**

(54) **OBJECT TRACKING METHOD AND DEVICE AS WELL AS TRACKING FEATURE SELECTION METHOD**

(57)    An object tracking method comprises generating, based on a position of the object in a previous frame, one or more training samples; calculating, for each of the one or more training samples, a value of each of one or more first features adopted when tracking the object in the previous frame; obtaining, for each of the one or more first features, statistical information of the corresponding first feature in a predetermined number of prior frames; determining, by utilizing the value and the statistical information of each of the one or more first features, reliability of the corresponding first feature; selecting, based on the reliability of each of the one or more first features, one or more second features adopted when tracking the object in a current frame; and detecting, by using the one or more second features, a position of the object in the current frame.

FIG.1

```
            START
              │
┌─────────────────────────────────────────┐
│ GENERATE TRAINING SAMPLES BASED ON       │ ~S110
│ POSITION OF OBJECT IN PREVIOUS FRAME     │
└─────────────────────────────────────────┘
              │
┌─────────────────────────────────────────┐
│ FOR EACH TRAINING SAMPLE, CALCULATE VALUE│ ~S120
│ OF EACH FIRST FEATURE ADOPTED            │
│ WHEN TRACKING OBJECT IN PREVIOUS FRAME   │
└─────────────────────────────────────────┘
              │
┌─────────────────────────────────────────┐
│ FOR EACH FIRST FEATURE,                  │ ~S130
│ OBTAIN ITS STATISTICAL INFORMATION IN    │
│ PREDETERMINED NUMBER OF PRIOR FRAMES     │
└─────────────────────────────────────────┘
              │
┌─────────────────────────────────────────┐
│ FOR EACH FIRST FEATURE,                  │ ~S140
│ DETERMINE ITS RELIABILITY BASED ON ITS   │
│ VALUE AND STATISTICAL INFORMATION        │
└─────────────────────────────────────────┘
              │
┌─────────────────────────────────────────┐
│ BASED ON RELIABILITY OF EACH FIRST       │ ~S150
│ FEATURE, DETERMINE SECOND FEATURES       │
│ ADOPTED WHEN TRACKING OBJECT IN          │
│ CURRENT FRAME                            │
└─────────────────────────────────────────┘
              │
┌─────────────────────────────────────────┐
│ BASED ON SECOND FEATURES,                │ ~S160
│ DETECT POSITION OF OBJECT IN CURRENT FRAME│
└─────────────────────────────────────────┘
              │
            END
```

EP 3 001 353 A2

**Description**

BACKGROUND OF THE INVENTION

1. Field of the Invention

The present invention generally relates to image recognition, and more specially relates to an object tracking method and device as well as a tracking feature selection method used for tracking an object.

2. Description of the Related Art

Object tracking techniques have been widely applied to numerous technical fields such as monitoring, human-machine interaction, vehicle navigation, and video indexing. As is well known, a feature used for performing object tracking plays a very important role in an object tracking process. At present, researchers have conducted a lot of studies, and have proposed many object tracking methods adopting, for example, gradient features, SIFT-based features, and/or SURT-based features. In most object tracking methods, a feature for object tracking is determined in advance, and is constant in the whole tracking process. However, since there exists the influence of interference such as lighting, and/or because the shape, the moving velocity, etc., of a tracking object may change while the tracking object moves, a fixed feature determined in advance cannot always well express the information of the tracking object in the whole tracking process.

SUMMARY OF THE INVENTION

The objective of the present invention is to solve the above-described problem. In particular, the aim of the present invention is to provide an object tracking method and device as well as a tracking feature selection method able to adopt, all the time in the tracking process, a feature by which a predetermined tracking object can be well expressed, so that the accuracy of the tracking result can be dramatically improved.

According to a first aspect of the present invention, a method of tracking an object is provided which includes:

a generation step of generating, based on a position of the object in a previous frame, one or more training samples;
a calculation step of calculating, regarding each of the one or more training samples, a value of each of one or more first features which were adopted when tracking the object in the previous frame;
a statistics step of obtaining, regarding each of the one or more first features, statistical information of the corresponding first feature in a predetermined number of prior frames;
a determination step of determining, regarding each of the one or more first features, reliability of the corresponding first feature based on both the value and the statistical information of the corresponding first feature;
a selection step of selecting, based on the reliability of each of the one or more first features, one or more second features which will be adopted when tracking the object in a current frame; and
a detection step of detecting, by utilizing the one or more second features, a position of the object in the current frame.

According to a second aspect of the present invention, a device of tracking an object is provided which includes:

a generation part configured to generate, based on a position of the object in a previous frame, one or more training samples;
a calculation part configured to calculate, regarding each of the one or more training samples, a value of each of one or more first features which were adopted when tracking the object in the previous frame;
a statistics part configured to obtain, regarding each of the one or more first features, statistical information of the corresponding first feature in a predetermined number of prior frames;
a determination part configured to determine, regarding each of the one or more first features, reliability of the corresponding first feature based on both the value and the statistical information of the corresponding first feature;
a selection part configured to select, based on the reliability of each of the one or more first features, one or more second features which will be adopted when tracking the object in a current frame; and
a detecting part configured to detect, by utilizing the one or more second features, a position of the object in the current frame.

According to a third aspect of the present invention, a tracking feature selection method for tracking an object is provided. The tracking feature selection method includes:

a generation step of generating, based on a position of the tracking object in a previous frame, one or more training samples;

a calculation step of calculating, regarding each of the one or more training samples, a value of each of one or more first features which were adopted when tracking the tracking object in the previous frame;

a statistics step of obtaining, regarding each of the one or more first features, statistical information of the corresponding first feature in a predetermined number of prior frames;

a determination step of determining, regarding each of the one or more first features, reliability of the corresponding first feature based on both the value and the statistical information of the corresponding first feature; and

a selection step of selecting, based on the reliability of each of the one or more first features, one or more tracking features which will be adopted when tracking the object in a current frame.

As a result, by utilizing the object tracking method and device as well as the tracking feature selection method according to the embodiments of the present invention, it is possible to continuously conduct online update with respect to a feature which cannot well express a tracking object, so that it is possible to adopt, all the time in the whole tracking process, one or more features which can well express the tracking object, so as to improve the accuracy of the tracking result.

BRIEF DESCRIPTION OF THE DRAWINGS

FIG. 1 is a flowchart of an object tracking method according to an embodiment of the present invention;
FIG. 2 illustrates plural training samples generated in an image;
FIG. 3A illustrates plural positive training samples obtained after affine transformation is conducted with respect to a positive training sample;
FIG. 3B illustrates plural negative training samples obtained after affine transformation is conducted with respect to a negative training sample;
FIG. 4 illustrates a generalized Haar feature;
FIG. 5 illustrates plural generalized Haar features;
FIG. 6 illustrates a positive training sample sequence, a negative training sample sequence, the Gaussian distribution of a feature in the positive training sample sequence, and the Gaussian distribution of the feature in the negative training sample sequence, respectively;
FIG. 7 is a flowchart of determining, on the basis of the reliability of each first feature, one or more second features which will be adopted when conducting object tracking with respect to a current frame;
FIG. 8 illustrates an example of a feature update process;
FIG. 9 is a flowchart of detecting, on the basis of one or more second features, the position of a tracking object in a current frame;
FIG. 10 illustrates an example of selecting plural candidate image segments from a predetermined region of a current image;
FIG. 11 is a block diagram of an object tracking device according to an embodiment of a present invention; and
FIG. 12 is a block diagram of an object tracking system according to an embodiment of a present invention.

DETAILED DESCRIPTION OF THE PREFERRED EMBODIMENTS

In order to let those people skilled in the art be able to well understand the present invention, hereinafter, the present invention will be described in detail on the basis of various embodiments and the drawings.

First of all, the fundamental thought of the object tracking technique according to the embodiments of the present invention is given. As described above, a predetermined fixed feature cannot always well express the information of a tracking object in the whole tracking process. Hence, in an embodiment of the present invention, when object tracking is conducted with respect to a frame (image), an online feature update process is carried out in advance, and then, the updated feature(s) is adopted to perform the object tracking on the frame. In particular, when object tracking needs to be conducted with respect to a current frame (e.g., a T-th frame), first it is determined whether one or more features (also called "one or more first features") used for carrying out object tracking with respect to a previous frame (e.g., a (T-1)-th frame) are proper. If there is a feature which is determined as improper, then an online feature update process is conducted so that the feature is replaced by a new feature. In this way, it is possible to obtain one or more features (also called "one or more second features" or "one or more tracking features") which are proper for conducting object tracking with respect to the current frame. After that, the one or more second features are utilized for performing object tracking on the current frame (the T-th frame). As a result, by conducting as needed, in the whole tracking process, the online feature update process with respect to the feature(s) which cannot well express the information of the tracking object, it is possible to adopt, all the time in the tracking process, one or more features which can well express the information of the tracking object, so as to be able to dramatically improve the accuracy of the tracking result.

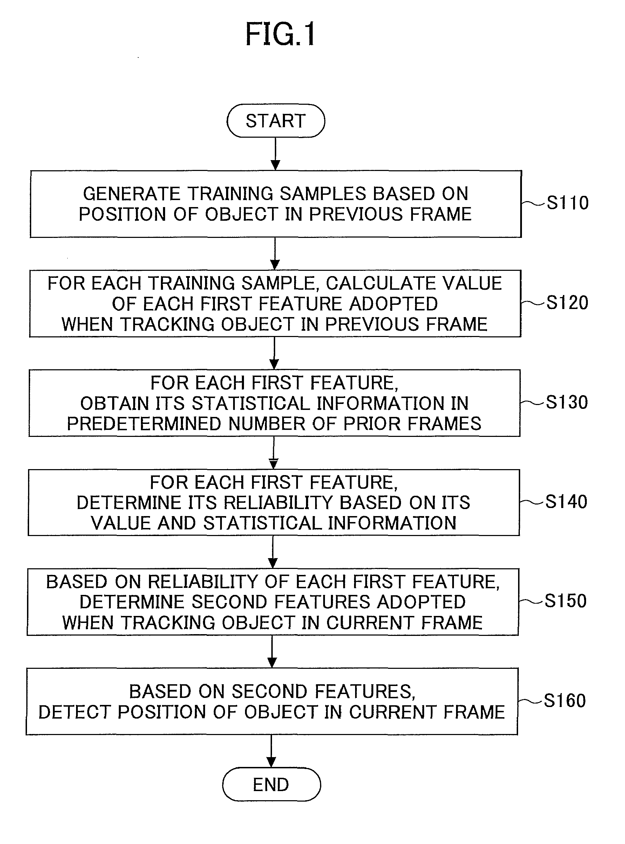

FIG. 1 is a flowchart of an object tracking method according to an embodiment of the present invention.

As shown in FIG. 1, in STEP S110, one or more training samples are generated on the basis of the position of an object (also called a "tracking object") in a previous frame.

The position of the object in the previous frame may be expressed in any proper way. In this embodiment, the minimum circumscribed rectangle of the object is adopted to represent the region (also called a "positional region") of the object in an image. In this step, the one or more training samples are generated in the previous frame on the basis of plural image segments at the positional region of the object in the previous frame.

It is possible to generate the one or more training samples in any proper way. For example, optionally, it is possible to select one or more image segments, from which the distances to the position of the object in the previous frame are less than a predetermined first distance, to serve as positive training samples, and to select one or more image segments, from which the distance to the position of the object in the previous frame is greater than a predetermined second distance and less than a predetermined third distance, to serve as negative training samples. Here the predetermined second distance is greater than or equal to the predetermined first distance.

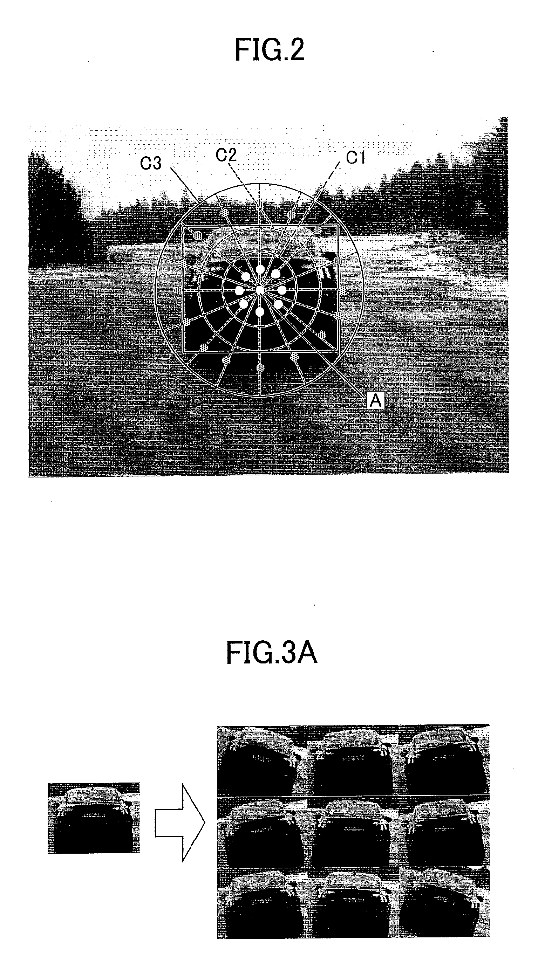

FIG. 2 illustrates plural training samples generated in an image.

In particular, FIG. 2 shows an example in which it is assumed that the tracking object is a vehicle. The rectangle (also called a "basic rectangle") in FIG. 2 represents the positional region of the vehicle in a previous frame (e.g., a (T-1)-th frame), and the central point A of the basic rectangle represents the center of the tracking object, i.e., the vehicle. Furthermore, in FIG. 2, there are three dotted circles C1, C2, and C3 whose centers are the central point A of the rectangle and whose radii are R1, R2, and R3, respectively. In the example shown in FIG. 2, it is possible to select one or more rectangles, whose sizes are the same as the size of the basic rectangle and whose centers are located in the dotted circle C1, to serve as positive training samples, and to select one or more rectangles, whose sizes are the same as the size of the basic rectangle and whose centers are located in the region between the dotted circles C2 and C3, to serve as negative training samples.

Moreover, in order to obtain more training samples, optionally, it is also possible to conduct affine transformation with respect to each of the positive and negative training samples generated as above, so as to obtain plural new training samples of the corresponding training sample. Here the number of the new training samples, which are generated after conducting affine transformation with respect to each of the positive and negative training samples, may be determined in advance according to actual circumstances.

FIG. 3A illustrates some new positive training samples obtained after affine transformation is conducted with respect to a positive training sample.

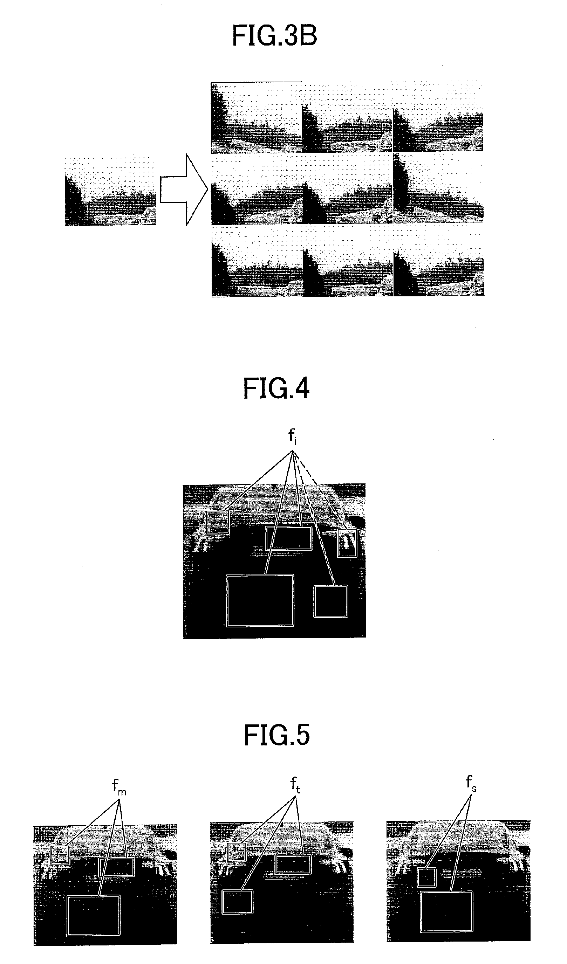

FIG. 3B illustrates some new negative training samples obtained after affine transformation is conducted with respect to a negative training sample.

Refer again to FIG. 1. In STEP S120, for each of the training examples, the value of each of one or more features (i.e., one or more first features), which were adopted when tracking the object in the previous frame, is calculated.

As described above, a lot of object tracking methods adopting features such as the gradient features, the SIFT-based features, and/or the SURF-based features have been developed up to now. In this embodiment, it is possible to use any proper feature to carry out object tracking. In what follows, a generalized Haar feature is taken as an example for illustration.

The generalized Haar feature is a well-used gradient feature used to represent the weighted sum of the sums of pixels in plural small image segments (i.e., a small image segment sequence). For example, the value $f_i$ of a generalized Haar feature i may be expressed by the following equation (1).

$$f_i = \sum_{k=0}^{n} \theta_k p_k \qquad (1)$$

Here, $p_k$ refers to the sum of pixels in a small image segment k, and $\theta_k$ refers to the weight of the small image segment k. The value of $\theta_k$ may be arbitrarily determined in advance. For example, the value of $\theta_k$ may be -1, 0, or 1. In this case, regarding a small image segment sequence of an image, the weights of most small image segments are set to 0, and the weights of the remaining small image segments, which may be randomly selected, are set to 1 or -1. In addition, regarding a small image segment k, it should satisfy $0 < k_w \leq w$ and $0 < k_h \leq h$. Here, $k_w$ and $k_h$ refer to the width and height of the small image segment k, respectively, and w and h refer to the width and height of the image, respectively.

Since actually a small image segment, whose weight is zero, does not contribute to the value of the relevant generalized Haar feature, it may also be considered that the relevant generalized Haar feature is formed by a few small image segments, whose weights are not zero, in an image.

FIG. 4 illustrates a generalized Haar feature.

FIG. 5 illustrates plural generalized Haar features.

As shown in FIG. 4, $f_i$ represents the weighted sum of the sums of pixels in five small image segments. Here the weights of three small image segments indicated by solid lines are set to -1 or 1, and the weights of two small image segments indicated by dotted lines are set to zero. In this case, it may also be considered that $f_i$ is the value of a generalized Haar feature generated by the three small image segments indicated by solid lines. Here it may be understood that regarding an image, by randomly selecting different small image segments (whose weights are not zero), it is possible to obtain plural generalized Haar features.

In this step (i.e., STEP S120 of FIG. 1), regarding each training sample shown in FIGS. 3A and 3B, the value of each of the one or more first features, which were adopted when carrying out object tracking with respect to the previous frame, is calculated. For example, if it is supposed that when conducting object tracking with respect to a (T-1)-th frame, three generalized Haar features $f_m$, $f_t$, and $f_s$ shown in FIG. 5 were adopted as the first features, then regarding each of the one or more training samples generated in STEP S110 of FIG. 1, the value of each of the three generalized Haar features $f_m$, $f_t$, and $f_s$ shown in FIG. 5 is calculated. That is, regarding each of the one or more training samples, the weighted sum of the sums of pixels in the small image segments, on the basis of which each of the three generalized Haar features $f_m$, $f_t$, and $f_s$ shown in FIG. 5 is generated, is calculated.

Refer again to FIG. 1. In STEP S130, for each of the one or more first features, the statistical information of the corresponding first feature in a predetermined number of prior frames is obtained.

The statistical information may be any proper information. Here a case, in which a parameter(s) of the Gaussian distribution of a feature serves as its statistical information, is taken as an example for illustration. In a tracking process, what is tracked in each frame (image) in an image sequence should be a same target object. As such, under an ideal circumstance, the value of a same generalized Haar feature in each positive training sample in each image should be basically the same, i.e., should satisfy a Gaussian distribution, whereas although the value of the same generalized Haar feature in each negative training sample in each image may vary as the corresponding background changes, they should also satisfy a Gaussian distribution. However, in the latter case, the variance of the Gaussian distribution is relatively great. On the basis of this, in this embodiment, a Gaussian distribution is utilized to express the distribution of each generalized Haar feature with respect to a sequence of time.

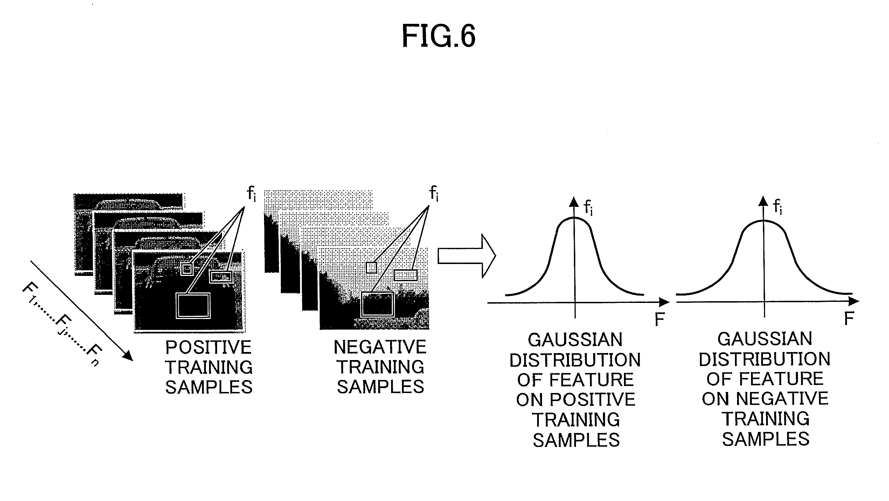

FIG. 6 illustrates a positive training sample sequence, a negative training sample sequence, the Gaussian distribution of a feature in the positive training sample sequence, and the Gaussian distribution of the feature in the negative training sample sequence, respectively.

As shown in FIG. 6, on the left side of the arrow, there are the positive training sample sequence and the negative training sample sequence of a predetermined number of prior frames, in which $F_j$ denotes the number of a prior frame, and i denotes a generalized Haar feature. Furthermore, on the right side of the arrow, there are the Gaussian distributions of the generalized Haar feature in the positive and negative training sample sequences. In particular, regarding the generalized Haar feature i, its Gaussian distributions in the positive and negative training sample sequences may be expressed by the following equation (2).

$$
\begin{aligned}
P_P(f_i) &= G(\mu_P, \sigma_P^2)_i \\
P_N(f_i) &= G(\mu_N, \sigma_N^2)_i
\end{aligned}
\qquad (2)
$$

Here, $(\mu_P, \sigma_P^2)_i$ and $(\mu_N, \sigma_N^2)_i$ are the parameters of the Gaussian distributions, and denote the mean value and variance of the feature i related to the positive training samples and the mean value and variance of the feature i related to the negative training samples, respectively.

Refer again to FIG. 1. In STEP S140, for each of the one or more first features, the reliability of the corresponding first feature is determined by utilizing the value of the corresponding first feature and its statistical information.

Particularly, in this step, first by utilizing the values of the one or more first features calculated in STEP S120 of FIG. 1, the parameters (i.e., the mean values and variances) of the Gaussian distributions of each first feature calculated based on the predetermined number of prior frames are updated.

As an optional approach, for each first feature, it is possible to use the following equation (3) to update the parameters of the Gaussian distributions of the corresponding first feature. Here it should be noted that this kind of approach is similar to the update mechanism of Kalman filtering.

$$K_t = \frac{P_{t-1}}{P_{t-1} + R}$$

$$\mu_t = \mu_{t-1} + K(f_i - \mu_{t-1}) \qquad (3)$$

$$\sigma_t^2 = \sigma_{t-1}^2 + K((f_i - \mu_t)^2 - \sigma_{t-1}^2)$$

$$P_t = (1 - K_t)P_{t-1}$$

The update process expressed by the equation (3) may be applied to the Gaussian distributions of each first feature in the positive and negative training sample sequences. As such, the equation (3) does not distinguish between positive and negative training sample sequences. Particularly, in the equation (3), $\mu_{t-1}$ and $\mu_t$ respectively denote the mean values of a first feature i before and after update with respect to the training samples; $\sigma_{t-1}^2$ and $\sigma_t^2$ respectively denote the variances of the first feature i before and after update with respect to the training samples; $f_i$ denotes the value of the first feature i calculated in STEP S120 of FIG. 1; K denotes a Kalman gain; R denotes the covariance of noise; P denotes the covariance of error; and the initial values of R and P may be set in advance (predetermined) according to actual needs.

Here it should be noted that the above-described update mechanism of Kalman filtering is just an example. It is also possible to adopt any other proper mechanism to update the parameters of the Gaussian distributions of each first feature by utilizing the value of the corresponding first feature calculated in STEP S120 of FIG. 1. For instance, as one of the most direct approaches, it is possible to use the following equation (4) to directly update, on the basis of the mathematical meanings of a mean value and variance, the mean values and variances of the Gaussian distributions.

$$\mu_t = \frac{(\mu_{t-1} + f_i)}{2}$$

$$\omega_t^2 = \frac{\sigma_{t-1}^2 + (f_i - \mu_i)^2}{2} \qquad (4)$$

Moreover, in this step (i.e., STEP S140 of FIG. 1), for each of the one or more first features, it is possible to update the parameters of the Gaussian distributions once with respect to each training sample, or it is also possible to update the parameters of the Gaussian distributions only once with respect to all the training samples. For instance, it is assumed that a first feature m is taken as an example, and in STEP S120 of FIG. 1, regarding each training sample, the value $f_m$ of the first feature m is calculated; that is, if there are one hundred training samples, then one hundred values $f_m$ are calculated. In this case, in STEP S130 of FIG. 1, it is possible to conduct, one hundred times, update with respect to the Gaussian distribution parameters of the one hundred training samples. That is, it is possible to conduct, for example, the equation (3) or (4) based update calculation by utilizing the one hundred values $f_m$, respectively. Alternatively it is possible to calculate the average value of the one hundred values $f_m$, and then to conduct once, for example, the equation (3) or (4) based update calculation by utilizing the average value.

After updating the Gaussian distribution parameters of the one or more first features, for each first feature, the reliability of the corresponding first feature is calculated on the basis of the updated Gaussian distribution parameters of the corresponding first feature.

Here it should be noted that in general, the reliability of a feature reflects the confidence degree of the tracking result obtained by carrying out object tracking using the feature. Whether the feature is reliable should be measured in many aspects. For example, it is possible to adopt the stability and distinguishability of the feature to determine the reliability of the feature.

The stability of the feature means that in the whole object tracking process, the feature is nearly constant. If the feature is stable, then the variance of the values of the feature in its positive training sample sequence should be very small, and the variance of the values of the feature in its negative training sample sequence should be relatively small. The distinguishability of the feature means that the difference between the values of the feature on its positive and negative training samples is relatively big. That is, the feature is specific to the tracking object; in other words, the feature is not in the background or other objects. As such, it is possible to easily detect the tracking object by using the feature. If the feature is distinguishable, then the difference between the average values of the feature in its positive and negative training sample sequences should be relatively big. An exemplary approach of determining the reliability $V_f$ of the feature on the basis of the stability and distinguishability of the feature is as expressed by the following equation (5).

$$V_f = N_\sigma(\sigma_p^2, \lambda_\sigma^p) + N_\sigma(\sigma_n^2, \lambda_\sigma^n) + N_\mu((\mu_p - \mu_n)^2, \lambda_\mu) \qquad (5)$$

Here, $\sigma_p^2$ and $\sigma_n^2$ denote the variances of the feature on its positive and negative training samples, respectively; $\mu_p$ and $\mu_n$ denote the mean values of the feature on its positive and negative training samples, respectively; $N_\sigma(\sigma_p^2, \lambda_\sigma^p)$, $N_\sigma(\sigma_n^2, \lambda_\sigma^n)$, and $N_\mu((\mu_p - \mu_n)^2, \lambda_\mu)$ are normalizing functions for normalizing $\sigma_p^2$, $\sigma_n^2$, and $(\mu_p - \mu_n)^2$ into a range of, for example, (0,1), respectively; $\lambda_\sigma^p$, $\lambda_\sigma^n$, and $\lambda_\mu$ are zooming factors, respectively. As long as it is possible to ensure that $N_\sigma(\sigma_p^2, \lambda_\sigma^p)$ and $N_\sigma(\sigma_n^2, \lambda_\sigma^n)$ are decreasing functions, and $N_\mu((\mu_p - \mu_n)^2, \lambda_\mu)$ is an increasing function, or to ensure that $N_\sigma(\sigma_p^2, \lambda_\sigma^p)$ and $N_\sigma(\sigma_n^2, \lambda_\sigma^n)$ are increasing functions, and $N_\mu((\mu_p - \mu_n)^2, \lambda_\mu)$ is an increasing function, the three normalizing functions may adopt any proper expressions, respectively. For example, it is possible to adopt the following equations (hereinafter, unifiedly called an "equation (6)").

$$N_\sigma(\sigma_p^2, \lambda_\sigma^p) = e^{\frac{\sigma_p^2}{\lambda_\sigma^p}}$$

$$N_\sigma(\sigma_n^2, \lambda_\sigma^n) = e^{\frac{\sigma_n^2}{\lambda_\sigma^n}} \qquad (6)$$

$$N_\mu((\mu_p - \mu_n)^2, \lambda_\mu) = 1 - e^{\frac{(\mu_p - \mu_n)^2}{\lambda_\mu}}$$

In addition, the values of the zooming factors $\lambda_\sigma^p$, $\lambda_\sigma^n$, and $\lambda_\mu$ depend on the specific expressions the normalizing functions adopt, and how to determine the values of the three zooming factors is well known in the art. In what follows, the three zooming factors $\lambda_\sigma^p$, $\lambda_\sigma^n$, and $\lambda_\mu$ in the equation (6) are taken as examples for illustration.

If it is supposed that the sum $p_1$ of pixels in each image segment for generating the feature satisfies $p_1 \in [s_{min}, s_{max}]$, then the value range of the feature on each of its positive and negative training samples may be expressed by the following equation (7).

$$f_i = \sum_{k=0}^{n} \lambda_k p_k \in [n_{-1} s_{max}, n_1 s_{max}] \qquad (7)$$

Here, $n_{-1}$ and $n_1$ denotes the numbers of image segments whose weights $\theta$ are -1 and 1, respectively.

If $f_{min} = n_{-1} s_{max}$ and $f_{max} = n_1 s_{max}$, then the equation (7) may be rewritten as the following equation (8).

$$f_i \in [f_{min}, f_{max}] \qquad (8)$$

Hence, the mean value range of the feature on its training samples may be expressed by the following equation (9).

$$\mu = \frac{1}{M} \sum_{s=1}^{M} f_i^s \in [f_{min}, f_{max}] \qquad (9)$$

Here, s denotes the number of a training sample, and $f_i^s$ denotes the value of the feature i related to the training sample s.

Moreover, the variance range of the feature on its training samples may be expressed by the following equation (10).

$$\sigma^2 = \frac{1}{M}\sum_{s=1}^{M}(f_i^s - \mu)^2 \in [0,(\frac{f_{max} - f_{min}}{2})^2] = [0,\sigma_{max}^2] \qquad (10)$$

Here, $\sigma_{max}^2 = (\frac{f_{max} - f_{min}}{2})^2$ .

The zooming factors $\lambda_\sigma^p$ and $\lambda_\sigma^n$ may take any values within the variance range expressed by the equation (10), respectively, and the zooming factor $\lambda_\mu$ may take any value within the mean value range expressed by the equation (9).

Up to here, how to determine the reliability of the feature by adopting the stability and distinguishability of the feature has been illustrated on the basis of the example. In the above description, whether the feature is stable is determined according to the variances of the values of the feature in the positive and negative training sample sequences. However, it is also possible to determine, by using another proper way, whether the feature is stable. For example, it is possible to calculate the sums of probabilities related to the Gaussian distributions of the feature in the positive and negative training sample sequences, respectively; the greater the sums of probabilities related to the Gaussian distributions are, the more reliable the feature is. In the same way, regarding the distinguishability of the feature, it is also possible to adopt another proper way to determine whether the feature has the distinguishability. For example, it is possible to calculate the ratio of the sums of probabilities related to the Gaussian distributions of the feature in the positive and negative training sample sequences; the greater the ratio is, the better the distinguishability of the feature is.

On the other hand, it should be noted that the above-described approach is merely an example in which both the stability and the distinguishability of the feature are adopted to determine the reliability of the feature. In fact, it is also possible to adopt another proper factor to measure the reliability of the feature. For example, it is possible to adopt only the stability or the distinguishability of the feature to determine the reliability of the feature.

Refer again to FIG. 1. In STEP S150, on the basis of the reliability of each of the one or more first features, one or more second features are selected (determined) which will be adopted when conducting object tracking with respect to the current frame.

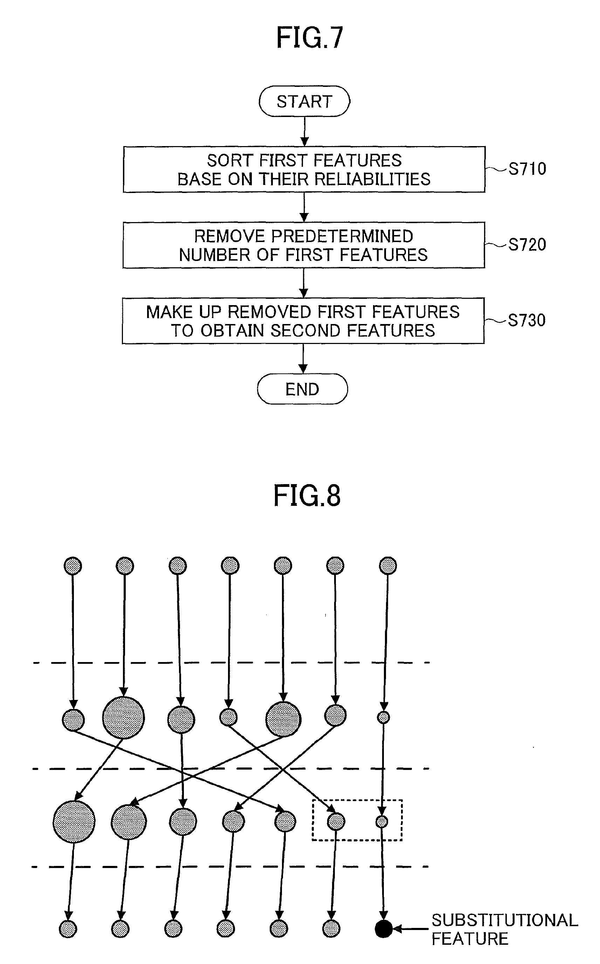

In what follows, STEP S150 will be described in detail by referring to FIG. 7.

FIG. 7 is a flowchart of STEP S150, i.e., a flowchart of a feature update process.

As shown in FIG. 7, in STEP S710, the one or more first features are sorted according to the reliability of each first feature.

In this step, the reliabilities of the one or more first features determined in STEP S140 of FIG. 1 are utilized for sorting the one or more first features. For example, if the reliabilities of the one or more first features have been determined by adopting the equation (5) in STEP S140, then in this step, the one or more first features are sorted in descending order, i.e., are arranged from largest to smallest, so as to obtain a top-to-bottom first feature ranking list (also called a "ranking list").

In STEP S720, a predetermined number of first features from the bottom of the top-to-bottom first feature ranking list are removed.

Since the reliabilities of first features ranked near the bottom of the top-to-bottom first feature ranking list are relatively bad, if these kinds of first features are adopted for conducting object tracking, then the confidence degree of the tracking result is also relatively bad. As such, in order to guarantee the accuracy of the tracking result, it is possible to remove these kinds of first features.

In particular, it is possible to remove, on the basis of the top-to-bottom first feature ranking list obtained in STEP S710, a predetermined number of first features from the bottom of the top-to-bottom first feature ranking list. The predetermined number of first features to be removed may be arbitrary, for example, one third, one quarter, or one fifth of the total number of the first features.

Optionally, considering that noise or other interference in a prior frame(s) may result in lower reliability of a first feature, it is possible not to immediately conduct the above removal process. In other words, first it is determined whether the reliability of a first feature is relatively low all the time in a predetermined time period, i.e., whether the first feature is ranked near the bottom of each of top-to-bottom first feature ranking lists which are continuously obtained on the basis of a predetermined number of prior frames immediately before the current frame. And then, only when it is determined that the first feature is ranked near the bottom of each of the top-to-bottom first feature ranking lists, the first feature is removed. The predetermined number of prior frames may be arbitrary, for example, five, ten, or fifteen prior frames.

In particular, it is assumed that at present, object tracking needs to be conducted with respect to a T-th frame (i.e., the current frame); a predetermined number of first features from the bottom of the relevant top-to-bottom first feature ranking list is one quarter of the total number of the first features in the relevant top-to-bottom first feature ranking list; and it has been determined that the reliabilities of sixth to eighth first features of twelve first features adopted when conducting object tracking with respect to a (T-1)-th frame are ranked tenth to twelfth in the relevant top-to-bottom first feature ranking list. At this time, the sixth to eighth first features are not immediately removed. As described above, first it is necessary to determine whether they are ranked tenth to twelfth in each of, for example, five prior fames ((T-5)-th to (T-1)-th frames) based top-to-bottom first feature ranking lists. And then, for example, if it is determined that the eighth first feature is ranked tenth to twelfth in each of the five prior frames based top-to-bottom first feature ranking lists, and the sixth and seventh first features are not, then only the eighth first feature is removed.

Refer again to FIG. 7. In STEP S730, the predetermined number of first features, which were removed, are made up by using the same predetermined number of substitutional features.

In this step, it is possible to randomly choose the same predetermined number of substitutional features, or to select them according to a predetermined rule. For example, the same predetermined number of substitutional features may be randomly chosen from a feature pool consisting of predetermined candidate features which may be generated in advance, or may be selected from the feature pool according to a rule on the basis of the degrees of correlation between the candidate features in the feature pool and the remaining first feature(s) (e.g., according to descending order of correlation degree). Alternatively, the same predetermined number of substitutional features may be generated in this step. Here it should be noted that the type of the same predetermined number of substitutional features should be the same as the type the removed predetermined number of first features. For example, if the type of the removed predetermined number of first features is the generalized Haar feature as described above, then the type of the same predetermined number of substitutional features is also the generalized Haar feature. After that, the same predetermined number of substitutional features and the remaining first feature(s) form the one or more second features which will be adopted when conducting object tracking with respect to the current frame.

FIG. 8 illustrates an example of the feature update process.

As shown in FIG. 8, each circle on the first row stands for a first feature adopted when conducting object tracking with respect to the previous frame. Each circle on the second row is obtained by conducting STEP S140 of FIG. 1 with respect to the corresponding first feature. The bigger a circle on the second row is, the higher the reliability of the corresponding first feature is; and vice versa. The circles (i.e., a top-to-bottom first feature ranking list) on the third row are obtained by conducting STEP S710 of FIG. 7 (i.e., sorting on the basis of the reliabilities of the first features) with respect to the first features. The two circles on the third row, surrounded by the dotted line stand for two first features which are ranked near the bottom (i.e., the sixth and seventh on the third row) of the top-to-bottom first feature ranking list. If it is assumed that only the one nearest the bottom (i.e., the seventh) on the third row is ranked near the bottom of each of a predetermined number of prior frames based top-to-bottom first feature ranking lists, then by conducting STEP S720 of FIG. 7, this one is removed. After that, by conducting STEP S730 of FIG. 7, it is possible to select a substitutional feature to make up the removed first feature so as to form seven second features together with the remaining six first features, as shown on the fourth row.

Refer again to FIG. 1. In STEP S160, the position of the tracking object in the current frame is determined on the basis of the one or more second features.

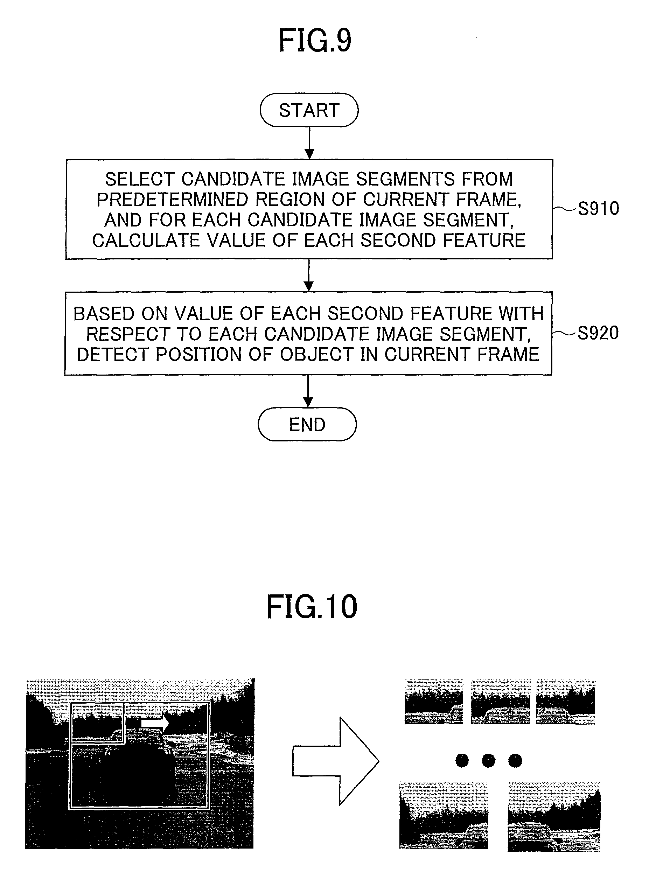

As described above, a lot of studies on object tracking using the generalized Haar feature have been conducted up to now. As such, in this step, it is possible to adopt any proper approach to determine the position of the tracking object in the current frame. In what follows, an example of STEP S160 of FIG. 1 will be given by referring to FIG. 9.

FIG. 9 is a flowchart of determining, on the basis of the one or more second features, the position of the tracking object in the current frame.

As shown in FIG. 9, in STEP S910, one or more candidate image segments are selected from a predetermined region of the current frame, and for each candidate image segment, the value of each second feature is calculated.

The predetermined region may be an arbitrarily set region of interest. For example, it may be a region in the current frame, which includes the tracking object and is estimated on the basis of the moving information of the tracking object and the position the tracking object in the previous frame; a region in the current frame, which corresponds to the positional region of the tracking object in the previous frame; a predetermined region in the current frame, which is bigger than the positional region in the previous frame; or even the whole region of the previous frame.

As described above, in this embodiment, the positional region of the tracking object in the previous frame is expressed by the minimum circumscribed rectangle of the tracking object. As such, the one or more candidate image segments selected in this step actually are those at the positional region of the tracking object in the current frame. It is possible to select the one or more candidate image segments according to any predetermined rule. Optionally, in order to obtain all the possible candidate image segments, in this embodiment, it is possible to adopt various sliding rectangles having different sizes so as to let them slide in the predetermined region of the current frame until the whole predetermined region is scanned. In particular, if it is supposed that S (which is a positive integer) sliding rectangles having different sizes are selected, then each selected sliding rectangle needs to slide in the predetermine region by using a predetermined step length until the whole predetermined region is scanned, an image segment corresponding to a position, to which the corresponding selected sliding rectangle slides, being a candidate image segment. Here it should be noted that each selected sliding rectangle should satisfy $0<w\leqq l_w$ and $0<h\leqq l_h$ in which w and h respectively refer to the width and height of the corresponding selected sliding rectangle, and $l_w$ and $l_h$ respectively refer to the width and height of the predetermined region. The predetermined step length may be one or plural pixels, and may be on the basis of the amount of calculation, the accuracy and efficiency of tracking, and so on.

FIG. 10 illustrates an example of selecting plural candidate image segments from a predetermined region of the current frame.

As shown in FIG. 10, the image on the left side of the arrow includes big and small rectangles. The big rectangle stands for the predetermined region of the current frame, and the small rectangle stands for an exemplary sliding rectangle. The images on the right side of the arrow are plural exemplary candidate image segments obtained by sliding various sliding rectangles having different sizes.

After selecting the one or more candidate image segments, for each candidate image segment, the value of each second feature (which is a generalized Haar feature) is calculated. Since this process is similar to STEP S120 of FIG. 1, its description is omitted here.

Refer again to FIG. 9. In STEP S920, the position of the tracking object in the current frame is determined on the basis of the value of each second feature with respect to each candidate image segment obtained in STEP S910.

As described above, in this embodiment, the positional region of the tracking object in the previous frame is expressed by the minimum circumscribed rectangle of the tracking object, and the one or more candidate image segments are those at the positional region of the tracking object in the current frame. As such, actually STEP S920 is determining a candidate image segment corresponding to the positional region of the tracking object in the current frame on the basis of the value of each second feature with respect to each candidate image segment obtained in STEP S910. The process of STEP S920 may be achieved by a classifier.

In particular, first a classifier is created by utilizing the value of each second feature. In what follows, an example will be given.

As described above, the reliabilities of the one or more second features vary. In order to improve the accuracy of the tracking result, it is possible to adopt only L (which is a positive integer) first features, which are ranked near the top of the top-to-bottom first feature ranking list obtained in STEP S710 of FIG. 7 and which are not removed in STEP S730 of FIG. 7 (i.e., forming the one or more second features), to create the classifier. The value of L may be predetermined as needed. For example, L may be equal to N/2 or a value which is greater than N/2 and less than N-M. Here N refers to the total number of the one or more second features, and M refers to the predetermine number of first features which are removed from the top-to-bottom first feature ranking list, as described in STEP S720 of FIG. 7.

On the other hand, the created classifier may be, for example, a SVM or AdaBoost based classifier or a Bayes classifier. If a Naive Bayes classifier is taken as an example, then it is possible to create the following classifier (11).

$$C = \log\left[\frac{\prod_{i=1}^{L} P(f_i \mid y=1)P(y=1)}{\prod_{i=1}^{L} P(f_i \mid y=0)P(y=0)}\right] \tag{11}$$
$$= \sum_{i}^{L}\left[\log\frac{P(f_i \mid y=1)}{P(f_i \mid y=0)}\right]$$

Here, C refers to a score, and $y\in\{0,1\}$ is a dichotomous variable in which 1 stands for a positive training sample and 0 stands for a negative training sample. In addition, it is supposed that the prior probabilities of positive and negative training samples are the same, i.e., P(y=1)=P(y=0).

Considering that the higher the reliability of an adopted first feature (i.e., an adopted second feature) is, the more important the influence of the adopted first feature on the score C is; optionally, it is possible to create the following classifier (12) by letting the reliabilities of the adopted first features calculated in STEP S140 of FIG. 1 be weights.

$$C = \sum_{i}^{n}\left[V_{f_i}\log\frac{P(f_i \mid y=1)}{P(f_i \mid y=0)}\right] \tag{12}$$

Here, $V_{fi}$ refers to the reliability of an adopted first feature i.

After creating the classifier, it is possible to utilize the created classifier to conduct classification with respect to the one or more candidate image segments, so as to determine a candidate image segment corresponding to the positional region of the tracking object in the current frame, thereby being able to determine the position of the tracking object in the current frame.

In particular, first, by utilizing the classifier (11) or (12), regarding each candidate image segment, the score C is calculated on the basis of the values of the one or more second features obtained in STEP S910 of FIG. 9. After that, a candidate image segment, whose score is highest, is determined as the candidate image segment corresponding to the positional region of the tracking object in the current frame. In this way, it is possible to determine the position of the tracking object in the current frame.

Here it should be noted that the approach of determining, by utilizing the classifier, the position of the tracking object in the current frame in STEP S920 of FIG. 9 is just an example. That is, it is also possible to adopt any other proper approach such as template matching or state space modeling to determine the position of the tracking object in the current frame.

Up to here, the object tracking method of tracking an object according this embodiment has been illustrated by referring to FIG. 1. By conducting the object tracking method with respect to the frames following a start (initial) frame, it is possible to continuously track the object. Here it should be noted that with respect to the start frame, since the object needs to be marked (determined) in advance, it is not necessary to conduct the object tracking method. However, it is still necessary to generate one or more features (i.e., first features) in the start frame, which will be adopted when conducting the object tracking method with respect to the next frame. Furthermore it is possible to randomly generate the one or more first feature in the start frame, or to generate them according to a predetermined rule. For example, it is possible to set one or more desirable tracking features in advance according to different tracking objects. Moreover each of the generated one or more first features may be the above-described generalized Haar feature, a SIFT based feature, a SURF based feature, and so on. In particular, the generalized Haar feature is adopted in this embodiment.

As a result, by utilizing the object tracking method according to this embodiment, it is possible to continuously conduct online update with respect to a feature, which cannot well express the object needing to be tracked, in the whole tracking process, so that it is possible to use, all the time in the whole tracking process, one or more features which can well express the object to track the object. In this way, it is possible to increase the accuracy of the object tracking method.

In what follows, an object tracking device for tracking an object according to an embodiment of the present invention will be given.

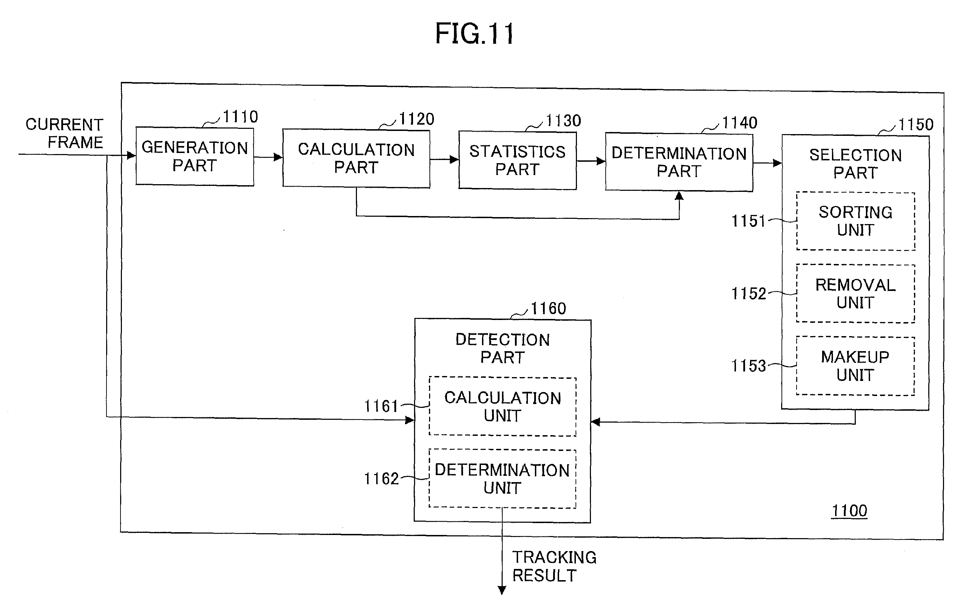

FIG. 11 is a block diagram of an object tracking device 1100 for tracking an object according to an embodiment of a present invention.

As shown in FIG. 11, the object tracking device 1100 may include a generation part 1110, a calculation part 1120, a statistics part 1130, a determination part 1140, a selection part 1150, and a detection part 1160.

The generation part 1110 is configured to generate, on the basis of the position of the object in a previous frame (image) (i.e., a frame immediately prior to a current frame), one or more training samples.

The calculation part 1120 is configured to calculate, with respect to each training sample, the values of one or more first features adopted when tracking the object in the previous frame.

The statistics part 1130 is configured to obtain, with respect to each first feature, statistical information of the corresponding first feature in a predetermined number of prior frames (i.e., frames prior to the current frame).

The determination part 1140 is configured to determine, with respect to each first feature, the reliability of the corresponding first feature by utilizing the value and the statistical information of the corresponding first feature.

The selection part 1150 is configured to select, on the basis of the reliability of each first feature, one or more second features which will be adopted when tracking the object in the current frame.

The detection part 1160 is configured to determine, by utilizing the one or more second features, the position of the object in the current frame.

Optionally, the selection part 1150 may include a sorting unit 1151, a removal unit 1152, and a makeup unit 1153.

The sorting unit 1151 is configured to sort the one or more first features according to their reliabilities so as to obtain a top-to-bottom first feature ranking list.

The removal unit 1152 is configured to remove a predetermined number of first features ranked near the bottom of the top-to-bottom first feature ranking list.

The makeup unit 1153 is configured to select the same predetermined number of substitutional features to make up the predetermined number of first features which were removed, so as to obtain one or more second features.

Optionally, the detection part 1160 may include a calculation unit 1161 and a determination unit 1162.

The calculation unit 1161 is configured to select one or more candidate image segments from a predetermined region in the current frame, and with respect to each candidate image segment, to calculate the value of each second feature.

The determination unit 1162 is configured to track, on the basis of the value of each second feature, the object in the current frame, and to determine the position of the object in the current frame.

Here it should be noted for more information about the respective parts and units, it is possible to see the relevant contents described in the object tracking method according to the above embodiment of the present invention. As such, they are omitted here.

In what follows, an object tracking system according to an embodiment of the present invention will be given.

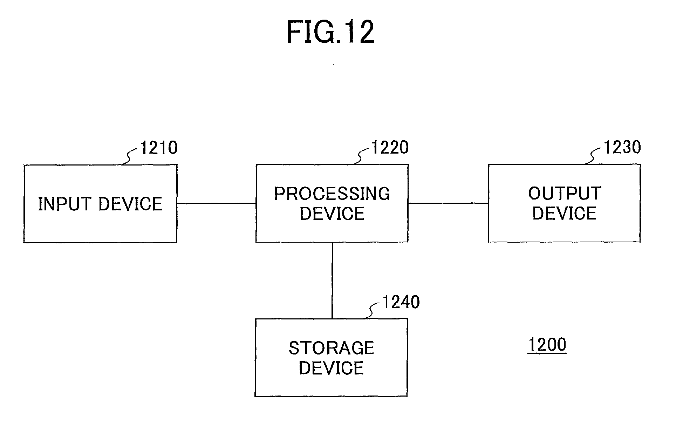

FIG. 12 is a block diagram of an object tracking system 1200 according to an embodiment of a present invention.

As shown in FIG. 12, the object tracking system 1200 may include an input device 1210, a processing device 1220, an output device 1230, and a storage device 1230.

The input device 1210 is configured to input the relevant images or information from the outside, for example, a frame (image) sequence captured by a camera. The input device 1210 may be a keyboard, a mouse, a camera, and so on.

The processing device 1220 is configured to implement the object tracking method according to the above embodiment of the present invention, or to serve as the object tracking device according to the above embodiment of the present invention. The processing unit 1220 may be a central processing unit of a computer, a chip having processing ability, and so on.

The output device 1230 is configured to output the result obtained by implementing the object tracking method to the outside, for example, the position of the tracking object. The output device 1230 may be a display, a printer, and so on.

The storage device 1240 is configured to store data related to implementing the object tracking method, for example, the frame sequence, the training samples, the tracking object, the values of the features, the parameters of the Gaussian distributions, and the reliabilities of the features in a volatile or non-volatile way. The storage device 1240 may be a random access memory (RAM), a read-only memory (ROM), a hard disk, a semiconductor memory, and so on.

Here it should be noted that the above respective embodiments are just exemplary ones, and the specific structure and operation of each of them may not be used for limiting the present invention.

Moreover, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention.

The present application is based on and claims the benefit of priority of Chinese Priority Patent Application No. 201410515632.1 filed on Sep. 29, 2014, the entire contents of which are hereby incorporated by reference.

**Claims**

**1.** A method of tracking an object, comprising:

a generation step of generating, based on a position of the object in a previous frame, one or more training samples;
a calculation step of calculating, for each of the one or more training samples, a value of each of one or more first features adopted when tracking the object in the previous frame;
a statistics step of obtaining, for each of the one or more first features, statistical information of the corresponding first feature in a predetermined number of prior frames;

a determination step of determining, by utilizing the value and the statistical information of each of the one or more first features, reliability of the corresponding first feature;

a selection step of selecting, based on the reliability of each of the one or more first features, one or more second features adopted when tracking the object in a current frame; and

a detection step of detecting, by using the one or more second features, a position of the object in the current frame.

2. The method according to claim 1, wherein, the generation step includes:

in the previous frame, selecting one or more image segments, from which distances to the position of the object in the previous frame are less than a predetermined first distance, as one or more positive training samples; and

in the previous frame, selecting one or more image segments, from which distances to the position of the object in the previous frame are greater than a predetermined second distance and less than a predetermined third distance, as one or more negative training samples,

wherein, the predetermined second distance is greater than or equal to the predetermined first distance.

3. The method according to claim 2, wherein, the generation step further includes:

conducting affine transformation with respect to each of the one or more positive and negative training samples, so as to acquire plural training samples after affine transformation.

4. The method according to any preceding claim, wherein:

in an initial frame for tracking the object, a predetermined number of features are generated to serve as one or more first features adopted when tracking the object in the initial frame.

5. The method according to any preceding claim, wherein:

the statistical information of each of the one or more first features is Gaussian distribution parameters of the corresponding first feature, and

the determination step includes

updating, by utilizing the value of each of the one or more first features, the Gaussian distribution parameters of the corresponding first feature;

determining, based on the updated Gaussian distribution parameters of each of the one or more first features, at least one of distinguishability and stability of the corresponding first feature; and

determining, based on the distinguishability and/or stability of each of the one or more first features, the reliability of the corresponding first feature.

6. The method according to any preceding claim, wherein, the selection step includes:

sorting, based on the reliabilities of the one or more first features, the one or more first features, so as to obtain a ranking list;

removing a predetermined first number of first features from the ranking list, which are ranked in a predetermined second number of members from bottom of the ranking list, and which are also ranked in the same predetermined second number of members from bottom of each of ranking lists obtained by conducting the same sorting with respect to one or more first features adopted when tracking the object in a predetermined number of prior frames; and

selecting the same predetermined first number of substitutional features to make up the removed predetermined first number of first features, so as to obtain the one or more second features.

7. The method according to any preceding claim, wherein, the detecting step includes:

a first step of selecting one or more candidate image segments from a predetermined region of the current frame, and for each of the one or more candidate image segments, calculating a value of each of the one or more second features; and

a second step of determining, based on the value of each of the one or more second features with respect to each of the candidate image segments, the position of the object in the current frame.

**8.** The method according to claim 7, wherein:

the detection step further includes creating a classifier by using the second one or more features, and
the second step includes classifying, by utilizing the classifier, the one or more candidate image segments, so as to determine a candidate image segment corresponding to a positional region of the object in the current frame, thereby determining the position of the object in the current frame.

**9.** A device for tracking an object, comprising:

a generation part configured to generate, based on a position of the object in a previous frame, one or more training samples;
a calculation part configured to calculate, for each of the one or more training samples, a value of each of one or more first features adopted when tracking the object in the previous frame;
a statistics part configured to obtain, for each of the one or more first features, statistical information of the corresponding first feature in a predetermined number of prior frames;
a determination part configured to determine, by utilizing the value and the statistical information of each of the one or more first features, reliability of the corresponding first feature;
a selection part configured to select, based on the reliability of each of the one or more first features, one or more second features adopted when tracking the object in a current frame; and
a detection part configured to detect, by using the one or more second features, a position of the object in the current frame.

**10.** A tracking feature selection method for tracking an object, comprising:

a generation step of generating, based on a position of the object in a previous frame, one or more training samples;
a calculation step of calculating, for each of the one or more training samples, a value of each of one or more first features adopted when tracking the object in the previous frame;
a statistics step of obtaining, for each of the one or more first features, statistical information of the corresponding first feature in a predetermined number of prior frames;
a determination step of determining, by utilizing the value and the statistical information of each of the one or more first features, reliability of the corresponding first feature; and
a selection step of selecting, based on the reliability of each of the one or more first features, one or more tracking features adopted when tracking the object in a current frame.

# FIG.1

START

GENERATE TRAINING SAMPLES BASED ON
POSITION OF OBJECT IN PREVIOUS FRAME —S110

FOR EACH TRAINING SAMPLE, CALCULATE VALUE
OF EACH FIRST FEATURE ADOPTED
WHEN TRACKING OBJECT IN PREVIOUS FRAME —S120

FOR EACH FIRST FEATURE,
OBTAIN ITS STATISTICAL INFORMATION IN
PREDETERMINED NUMBER OF PRIOR FRAMES —S130

FOR EACH FIRST FEATURE,
DETERMINE ITS RELIABILITY BASED ON ITS
VALUE AND STATISTICAL INFORMATION —S140

BASED ON RELIABILITY OF EACH FIRST FEATURE,
DETERMINE SECOND FEATURES ADOPTED
WHEN TRACKING OBJECT IN CURRENT FRAME —S150

BASED ON SECOND FEATURES,
DETECT POSITION OF OBJECT IN CURRENT FRAME —S160

END

## FIG.2

## FIG.3A

# FIG.3B

# FIG.4

$f_i$

# FIG.5

$f_m$       $f_t$       $f_s$

# FIG.6

EP 3 001 353 A2

# FIG.7

```
                    ( START )
                        │
                        ▼
        ┌─────────────────────────────────┐
        │       SORT FIRST FEATURES       │ ──S710
        │    BASE ON THEIR RELIABILITIES  │
        └─────────────────────────────────┘
                        │
                        ▼
        ┌─────────────────────────────────┐
        │       REMOVE PREDETERMINED      │ ──S720
        │     NUMBER OF FIRST FEATURES    │
        └─────────────────────────────────┘
                        │
                        ▼
        ┌─────────────────────────────────┐
        │  MAKE UP REMOVED FIRST FEATURES │ ──S730
        │   TO OBTAIN SECOND FEATURES     │
        └─────────────────────────────────┘
                        │
                        ▼
                     ( END )
```

# FIG.8

SUBSTITUTIONAL
FEATURE

# FIG.9

START

SELECT CANDIDATE IMAGE SEGMENTS FROM
PREDETERMINED REGION OF CURRENT FRAME,
AND FOR EACH CANDIDATE IMAGE SEGMENT,
CALCULATE VALUE OF EACH SECOND FEATURE ⟋S910

BASED ON VALUE OF EACH SECOND FEATURE WITH
RESPECT TO EACH CANDIDATE IMAGE SEGMENT,
DETECT POSITION OF OBJECT IN CURRENT FRAME ⟋S920

END

# FIG.10

# FIG.11

GENERATION PART 1110 → CALCULATION PART 1120 → STATISTICS PART 1130 → DETERMINATION PART 1140 → SELECTION PART 1150

CURRENT FRAME → GENERATION PART

SELECTION PART:
- SORTING UNIT 1151
- REMOVAL UNIT 1152
- MAKEUP UNIT 1153

DETECTION PART 1160:
- CALCULATION UNIT 1161
- DETERMINATION UNIT 1162

TRACKING RESULT

1100

EP 3 001 353 A2

# FIG.12

1210

INPUT DEVICE

1220

PROCESSING
DEVICE

1230

OUTPUT
DEVICE

1240

STORAGE
DEVICE

1200

**EP 3 001 353 A2**

**REFERENCES CITED IN THE DESCRIPTION**

**Patent documents cited in the description**

- CN 201410515632